# FASCICULE DE BREVET EUROPEEN

(11) **EP 1 158 633 B1**
(45) Date de publication et mention de la délivrance du brevet: **30.07.2003**
(21) Numéro de dépôt: 00400638.3
(22) Date de dépôt: 10.05.2000
(51) Int. Cl.: H02B 1/052, H05K 5/02, F16F 1/12

(54) **Appareil électrique à encliqueter sur un rail**
Elektrisches Installationsgerät zum Aufschnappen auf eine Tragschiene
Electrical apparatus to be snapped on a rail

(43) Date de publication de la demande: 28.11.2001
(73) Titulaire: Schneider Electric Industries SAS, 92500 Rueil-Malmaison (FR)
(72) Inventeur: Comtois, Patrick, 21000 Dijon (FR); Garcia, José, 21000 Dijon (FR); Larcher, Patrick, 21121 Ahuy (FR); Moreux, Alain, 21000 Dijon (FR)

(56) Documents cités:
- EP-A- 0 715 383
- DE-A- 2 429 982
- DE-C- 3 544 363
- FR-A- 935 949
- FR-A- 2 014 871
- FR-A- 2 551 807
- US-A- 4 671 697

## Description

La présente invention concerne un appareil électrique comprenant une partie arrière encliquetable sur un rail porteur doté d'un bord d'accrochage, et comprenant dans sa partie arrière au moins un ressort de compression d'axe orthogonal à la longueur du rail, disposé dans un logement de forme générale cylindrique qui débouche vers le bord d'accrochage du rail et qui offre une butée pour le ressort.

Il est bien connu d'encliqueter des appareils électriques sur des rails tels que des profilés normalisés. L'utilisation de ressorts de compression hélicoïdaux applicables directement sur le bord du rail est connue, par exemple d'après le document FR-2 551 807, mais ce document ne décrit pas de moyens d'insertion de tels ressorts dans leur logement.

D'autre part, d'après le document FR 2 708 154, il est connu d'utiliser comme ressort un plot cylindrique en élastomère qui est inséré dans le logement, l'insertion s'effectuant par engagement à partir d'une ouverture de la face arrière de l'appareil, avec forçage de parois du logement. Le fait que le logement reste ouvert sur l'arrière de l'appareil entraîne, quand on sollicite le ressort de manière désaxée, un risque d'arrachement du ressort hors de son logement. Or une telle sollicitation désaxée des ressorts se rencontre fréquemment quand on monte ou démonte les appareils.

Le document US 4 671 697 montre un ressort hélicoïdal servant à mettre en pression un curseur contre le bord du rail. Le ressort est enfilé sur un doigt en L prévu dans le curseur et l'opérateur déforme le doigt pour positionner le ressort selon l'axe de pression du curseur.Un tel dispositif suppose de recourir à un curseur déplaçable.

L'invention a pour but d'éviter le risque d'extraction des ressorts de compression utilisés dans des appareils électriques pour les accrocher sur des rails de support tels que des profilés normalisés, dans une solution à coût de fabrication réduit.

Selon l'invention, le logement débouche vers l'extérieur, à l'opposé du bord d'accrochage du rail, par une ouverture servant à l'introduction axiale du ressort lors du montage de celui-ci, et le logement présente à l'opposé de la butée une portée rabattable de maintien du ressort, prévue sur une paroi élastique du logement, sur laquelle est applicable un élément de maintien propre au ressort, la portée de maintien étant inactive lors de l'introduction du ressort et rabattue en position de maintien après l'introduction du ressort.

La portée peut être prévue sur une paroi élastique du logement coopérant avec un ressort hélicoïdal simple, par exemple au moyen d'une languette à rampe d'écartement et bec de blocage, ou au moyen d'un cadre verrouillable.

La description va être faite ci-après de modes de réalisation non limitatifs de l'invention, illustrés par les dessins annexés.

La figure 1 est une vue schématique en élévation d'un appareil électrique conforme à l'invention.

Les figures 2a et 2b représentent en perspective deux variantes d'exécution de l'invention, avant montage des ressorts.

Les figures 3 à 5 sont des coupes agrandies d'un logement de ressort, dans la première variante d'exécution, respectivement lors du montage du ressort, avant enclenchement du bec et en position opératoire.

Les figures 6 et 7 montrent le logement en vue de dessus et en coupe selon le plan VII-VII de la figure 5.

La figure 8 est une coupe de la deuxième variante d'exécution.

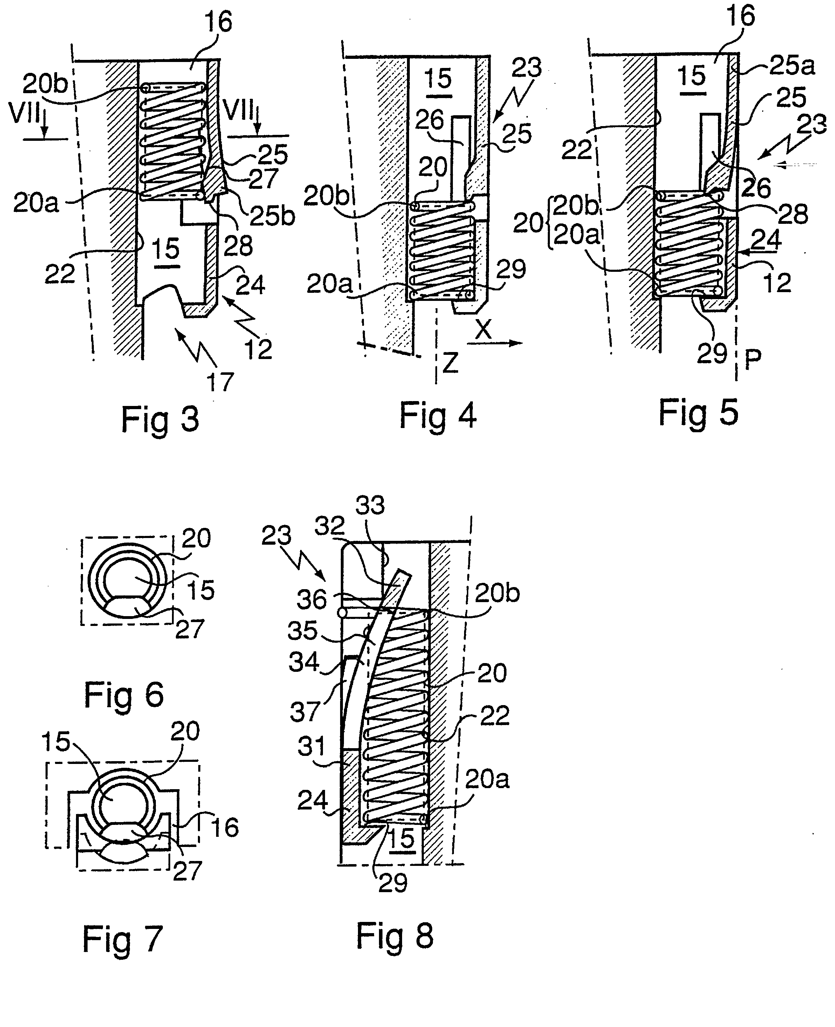

L'appareil électrique illustré sur les figures est un appareil à basse tension muni d'un boîtier isolant 10, par exemple un corps ou un socle isolant, apte à se fixer par encliquetage sur un rail profilé porteur 11 de type chapeau. Vers sa face arrière 12, c'est-à-dire à l'opposé de la face avant 13 accessible à l'opérateur, le boîtier 10 présente deux retraits 14a,14b dans lesquels peuvent pénétrer les bords externes 11a,11b du rail. Deux ressorts hélicoïdaux 20 sont disposés chacun dans un logement cylindrique 15 prévu dans le boîtier près de sa face arrière 12. Chaque ressort présente une spire extrême basse 20a et une spire extrême haute 20b (voir figures 3 à 5).

Chaque logement 15 a un axe Z orthogonal à la direction générale L du rail ; le logement 15 débouche vers le retrait 14a par une ouverture 17 (voir figures 3 et 5) de manière que le ressort 20, dépassant légèrement dans le retrait 14a, peut s'accrocher par sa spire basse 20a contre le bord du rail ; le logement 15 débouche vers le haut par une ouverture 16 sensiblement circulaire autorisant le montage du ressort.

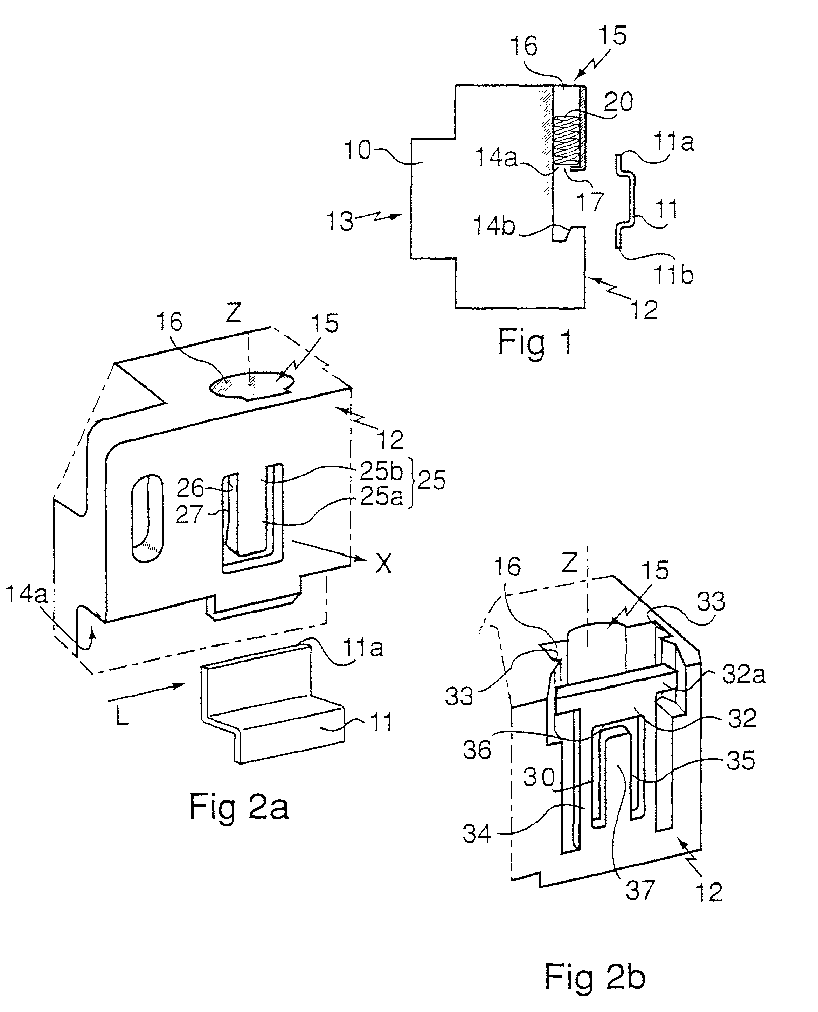

Dans le mode de réalisation des figures 2a et 3 à 7, le logement 15 est délimité du côté avant par une paroi rigide 22 et du côté arrière par une paroi élastique 23 et une paroi rigide 24. La paroi élastique 23 est située vers le haut, tandis que la paroi rigide 24 est située vers le bas.

La paroi élastique 23 est constituée par une languette 25 encastrable dans le boîtier à son extrémité haute 25a et apte à fléchir à son extrémité basse 25b. La languette 25 est désolidarisée à cet effet de la face 12 par des fentes latérales 26. L'extrémité basse 25b de la languette présente une rampe 27 et une portée constituée par un bec 28 verrouillable sur la spire haute 20b du ressort. En position opératoire (figure 5), le ressort 20 est donc arc-bouté vers le haut sur le bec 28 de la paroi élastique 23 et vers le bas sur une butée 29 de la paroi rigide 24, et il est contenu latéralement par les parois fixes 22,24. La languette 25 est sensiblement dans l'alignement de la paroi rigide 24 pour contribuer à définir un plan approprié de fixation P au niveau de la face arrière 12 du boîtier.

Dans le mode de réalisation des figures 2b et 8, la paroi élastique 23 forme un cadre 30 encastré à son extrémité basse 31, tandis que son extrémité haute forme une traverse 32 qui se termine latéralement par des ergots 32a destinés à s'accrocher contre des épaulements 33 contigus au logement 15. Le cadre 30 présente deux jambes 34 laissant entre elles un espace central 35 dans lequel le ressort se loge en butant vers le haut contre une portée 36 du cadre et vers le bas contre la butée 29. Dans l'espace 35 est d'autre part situé un doigt 37 formant un appui latéral pour le ressort.

Dans la première variante d'exécution, le ressort se monte comme indiqué figures 3 à 5. Comme on le voit figure 3, il est introduit par l'ouverture 17 et descendu par poussée dans le logement 15 jusqu'à prise d'appui de sa spire inférieure 20a sur la rampe 27. Grâce à la rampe, lorsque le ressort continue de descendre, il écarte la languette élastique 25 dans la direction X perpendiculaire à Z (voir en tirets sur la figure 7), puis s'arrête contre la butée 29 (figure 4). Ensuite, on repousse le bec 28 dans la direction opposée à X (selon la flèche indiquée figure 5) pour que la spire supérieure 20b du ressort se bloque contre le bec et que le ressort et la languette restent mutuellement arc-boutés dans la position opératoire. Dans cette position, la paroi élastique 23 est sensiblement dans l'alignement de la paroi fixe 24, avec l'extrémité basse 25b de la languette légèrement rentrée par rapport au plan P.

Dans la deuxième variante, adaptée à des ressorts plus longs, le cadre 30, initialement dans la position dessinée figure 2b, est rabattu dans la direction opposée à X vers la position de la figure 8, où les ergots 32a viennent s'accrocher contre les épaulements 33, tandis que le ressort reste contraint dans l'espace 35 du cadre.

La pression exercée par l'appareil sur le rail quand on accroche l'appareil se traduit par une légère compression du ressort, l'effort correspondant étant repris par la paroi élastique sur laquelle s'arc-boute le ressort, au niveau du bec 28 ou de la butée 36.

## Revendications

1. Appareil électrique comprenant une partie arrière encliquetable sur un rail porteur doté d'un bord d'accrochage, et comprenant dans la partie arrière au moins un ressort de compression (20) applicable sur le bord d'accrochage (11a) et ayant un axe orthogonal à la longueur du rail, le ressort étant disposé dans un logement de forme générale cylindrique (15) qui débouche vers le bord d'accrochage tout en offrant du côté du rail une butée (29) pour le ressort ,
***caractérisé par le fait que** :*
- le logement (15) débouche vers l'extérieur, à l'opposé du bord d'accrochage du rail, par une ouverture (16) servant à l'introduction axiale du ressort lors de son montage,
- le logement (15) présente à l'opposé de la butée (29) une portée rabattable de maintien (28,36) prévue sur une paroi élastique (23) du logement (15) sur laquelle est applicable un élément de maintien (20b) propre au ressort, la portée de maintien étant inactive lors de l'introduction du ressort et rabattue en position de maintien après l'introduction du ressort.

2. Appareil selon la revendication 1, **caractérisé par le fait que** la portée (28) est prévue sur une languette élastique (25) qui constitue la paroi élastique (23) du logement (15).

3. Appareil selon la revendication 2, **caractérisé par le fait que** le ressort de compression (20) est un ressort hélicoïdal présentant une spire d'accrochage (20a) et, à une extrémité du ressort opposée à celle où est située la spire d'accrochage (20a), une spire (20b) constituant l'élément de maintien, que la languette (25) présente une rampe d'écartement (27) actionnable par la spire d'accrochage (20a) et que la portée de maintien (28) est formée par un bec de la languette (25) qui se verrouille sur l'élément de maintien (20b) du ressort (20).

4. Appareil selon la revendication 1, **caractérisé par le fait que** le logement (15) est délimité du côté arrière par la paroi élastique (23) et par une paroi fixe (24), la paroi élastique étant, en position de maintien du ressort (20), sensiblement dans l'alignement de la paroi fixe.

5. Appareil selon la revendication 1, **caractérisé par le fait que** la portée de maintien (36) est constituée par un cadre (30) qui fait partie du boîtier, en tant que paroi élastique (23) du logement (15), -et qui présente un espace central (35) prévu pour le passage du ressort (20), le cadre étant rabattu vers l'avant après introduction du ressort (20) dans l'espace central pour s'encliqueter contre des épaulements (33) contigus au logement (15).

## Claims

1. Electrical device comprising a rear part that can be snapped onto a support rail equipped with a locking edge and comprising, in its rear part, at least one compression spring (20) that can be applied onto the locking edge (11a) with an axis orthogonal to the length of the rail, with the spring arranged in a housing of a general cylindrical shape (15) which opens onto the locking edge of the rail while offering a stop (29) for the spring,
**characterised in that**:
- the housing (15) opens to the outside, opposite the rail locking edge, via an opening (16) used for the axial insertion of the spring during its assembly,
- the housing (15) comprises a fold down support bearing surface (28, 36) opposite the stop (29) fixed on an elastic wall (23) of the housing (15) on which a support component (20b) specific to the spring is fitted, this bearing surface being inactive during the insertion of the spring and folded down in the support position after insertion of the spring.

2. Device according to claim 1, **characterised in that** the bearing surface (28) is provided on an elastic tongue (25) which forms the elastic wall (23) of the housing (15).

3. Device according to claim 2, **characterised in that** the compression spring (20) is a helical spring with a locking turn (20a), and a turn (20b) forming the support component at the end of the spring opposite the end at which the locking turn (20a) is located, and **in that** the tongue (25) comprises a spacing ramp (27) that can be actuated by the locking turn(20a) and **in that** the support bearing surface (28) is formed by a jaw of the tongue (25) which is locked on the support component (20b) of the spring (20).

4. Device according to claim 1, **characterised in that** the housing (15) is delimited at the rear by the elastic wall (23) and by a fixed wall (24), the elastic wall being approximately in line with the fixed wall when it is in the spring support position (20).

5. Device according to claim 1, **characterised in that** the support bearing surface (36) is composed of a frame (30) which is part of the casing, forming an elastic wall (23) of the housing (15), and comprises a central space (35) provided for the passage of the spring (20), the frame being folded forwards after insertion of the spring (20) in the central space to lock against shoulders (33) adjacent to the housing (15).

## Patentansprüche

1. Elektrisches Gerät mit einem hinteren Teil, das auf einer mit einer Einhakkante versehenen Tragschiene angerstet werden kann und das in dem unteren Teil mindestens eine Druckfeder (20) enthält, die auf den Einhakrand (11a) aufgebracht werden kann und die eine rechtwinklig zur Schienenlänge stehende Achse hat, wobei die Feder in einer grundsätzlich zylinderförmigen Lagerung (15) angeordnet ist, die in den Einhakrand mündet, wobei sie auf der Schienenseite einen Anschlag (29) für die Feder bildet,
**dadurch gekennzeichnet, dass**:
die Lagerung (15) gegenüber dem Einhakrand der schiene durch eine Öffnung (16), die zur axialen Einführung der Feder bei ihrer Montage dient, nach außen mündet.
die Lagerung (15) gegenüber dem Anschlag (29) einen herunterklappbaren Haltebereich (28, 36) aufweist, der auf einer elastischen Wand (23) der Lagerung (15) vorgesehen ist, auf welche ein der Feder angehörendes geeignetes Halteelement (20b) aufgebracht werden kann, wobei der Haltebereich beim Einführen der Feder inaktiv und nach dem Einführen der Feder in der Halteposition heruntergeklappt ist.

2. Gerät nach Anspruch 1, **dadurch gekennzeichnet, dass** der Bereich (28) auf einer elastischen Lasche (25) vorgesehen ist, welche die elastische Wand (23) der Lagerung (15) bildet.

3. Gerät nach Anspruch 2, **dadurch gekennzeichnet, dass** die Druckfeder (20) eine Spiralfeder ist, die eine Einhakwindung (20a) sowie an einem Ende der Feder, das dem Ende gegenüberliegt, an dem sich die Einhakwindung (20a) befindet, eine das Halteelement bildende Windung (20b) aufweist, dass die Lasche (25) eine durch die Einhakwindung (20a) zu bestätigende Abspreizsteigung (27) aufweist und dass der Haltebereich (28) von einem Schnabel der Lasche (25) gebildet wird, der auf dem Halteelement (20b) der Feder (20) verriegelbar ist.

4. Gerät nach Anspruch 1, **dadurch gekennzeichnet, dass** die Lagerung (15) auf der hinteren Seite durch die elastische Wand (23) und durch eine feste Wand (24) abgegrenzt ist, wobei die elastische wand in der Halteposition der Feder (20) in etwa in linearer Ausrichtung zur festen Wand liegt.

5. Gerät nach Anspruch 1, **dadurch gekennzeichnet, dass** der Haltebereich (36) durch einen Rahmen (30) gebildet wird, der als elastische Wand (23) der Lagerung (15) Bestandteil des Gehäuses ist und der einen für die Durchführung der Feder (20) vorgesehenen mittleren Freiraum (35) aufweist, wobei der Rahmen nach Einführung der Feder (20) in den mittleren Freiraum nach vorne hin heruntergeklappt wird, um in die in der Lagerung (15) eingezwängten Absätze (33) einzurasten.
